# EUROPÄISCHE PATENTSCHRIFT

(11) **EP 1 645 450 B1**
(45) Veröffentlichungstag und Bekanntmachung des Hinweises auf die Patenterteilung: **27.08.2008**
(21) Anmeldenummer: 05021818.9
(22) Anmeldetag: 06.10.2005
(51) Int. Cl.: B60K 6/28, H01M 2/10

(54) **Kraftfahrzeug mit einem Hybridantrieb**
Hybrid propulsion vehicle
Véhicule à propulsion hybride

(30) Priorität: 09.10.2004 DE 102004049298
(43) Veröffentlichungstag der Anmeldung: 12.04.2006
(73) Patentinhaber: Bayerische Motoren Werke Aktiengesellschaft, 80809 München (DE)
(72) Erfinder: Glonner, Hans, 85276 Pfaffenhofen (DE)

(56) Entgegenhaltungen:
- EP-A- 0 663 701
- EP-A- 1 006 597
- EP-A- 1 030 389
- DE-A1- 4 032 606
- DE-A1- 10 261 630
- US-A- 3 444 946
- US-A- 2004 150 926
- US-A1- 2002 093 246
- US-A1- 2003 012 998
- US-B1- 6 498 406
- PATENT ABSTRACTS OF JAPAN Bd. 1995, Nr. 05, 30. Juni 1995 (1995-06-30) & JP 07 047892 A (TOKYO R & D:KK), 21. Februar 1995 (1995-02-21)

## Beschreibung

Die Erfindung betrifft ein Kraftfahrzeug mit einem Hybridantrieb gemäß dem Oberbegriff des Anspruchs 1.

Aus der DE 102 03 918 ist bereits ein derartiges Kraftfahrzeug bekannt, bei dem eine aus mehreren Einzelkondensatorzellen bestehende Kondensatorbatterie in Hohlräumen von Karosserieelementen, wie beispielsweise einem Schwellerhohlraum, angeordnet ist.

Aus der EP-A-0 663 701 ist ein Batteriepaket für ein Elektrofahrzeug bekannt, das mit einem zusätzlichen Verbrennungsmotor versehen sein kann. Bei den Batterien handelt es sich um elektrochemische Spannungsquellen.

Das Batteriepaket besteht aus einzelnen Batterien, die an einer Karosserie des Fahrzeuges angeordnet sind. Die Anzahl der vorhandenen Batterien sind in Reihe geschaltet, wobei mindestens zwei Batteriereihen nebeneinander angeordnet sind. Durch die T-förmige Anordnung der Einzelkondensatorzellen ist es erforderlich, Leitungen zu verlegen, um den Strom an den gewünschten Ort zu leiten.

Aus der US 2002/093246 A1 geht ein Kraftfahrzeug mit einem Hybridantrieb hervor, bei dem zwei Reihen zu je drei Batterien übereinander angeordnet sind. Bei den Batterien handelt es sich um elektrochemische Spannungsquellen.

Aus der EP-A-1 006 597 ist ein Kraftfahrzeug mit einem Hybridantrieb bekannt, bei dem drei Reihen, die mehrere Batterien aufweisen, übereinander angeordnet sind. Bei den Batterien handelt es sich um elektrochemische Spannungsquellen, d.h., um eine so genannte Lithium-lonen Batterie.

Aus der US-B1-6 498 406 ist ein Kraftfahrzeug mit einem Hybridantrieb bekannt, bei dem eine Vielzahl von Kondensator-Batterien parallel geschaltet ist.

Aus der US-A-3 444 946 ist ein Kraftfahrzeug mit einem Hybridantrieb bekannt, bei dem vier Batterien vorgesehen sind, wobei jeweils zwei Batterien hintereinander geschaltet sind. Bei den Batterien handelt es sich um elektrochemische Spannungsquellen, d.h., um Nickel-Cadmium Batterien.

Aus der DE 102 61 630 A1 ist ein Kraftfahrzeug mit einem Hybridantrieb bekannt, bei dem in einem Boden des Kraftfahrzeuges symmetrisch zur Fahrzeuglängsachse jeweils eine Reihe von Batterien angeordnet ist. Bei den Batterien handelt es sich um elektrochemische Spannungsquellen, d.h., um eine Brennstoffzelle.

Aus der DE 40 32 606 ist ein Kraftfahrzeug mit einem Hybridantrieb bekannt, bei dem ein Torsionsrohr vorgesehen ist, in dem eine Vielzahl von elektrischen Batterien hintereinander angeordnet ist. Das Torsionsrohr verläuft beispielsweise in der Fahrzeugmitte in Fahrzeuglängsrichtung unterhalb eines Bodenbleches der Fahrgastzelle.

Aus der US 2003/012998 A1 ist ein Kraftfahrzeug mit einem Hybridantrieb bekannt, bei dem eine Brennstoffzelleneinheit unterhalb eines Bodenbleches der Fahrgastzelle angeordnet ist. Bei der Brennstoffzelleneinheit handelt es sich um eine PEMFC - Brennstoffzelle (Proton Exchange Membrane Fuell Cell), d.h. um eine elektrochemische Spannungsquelle.

Aus der EP-A-1 030 389 ist die Anordnung einer Batterieeinheit in einem Kofferraum hinter einer Rücksitzbank bekannt. Die einzelnen Batterien sind in Reihen nebeneinander und übereinander angeordnet. Bei den Batterien handelt es sich um elektrochemische Spannungsquellen, d.h., um Nickel-Wasserstoff Batterien.

Aus der JP 07047892 A ist eine Befestigungsvorrichtung für Batterien eines Kraftfahrzeuges bekannt, bei dem mehrere Reihen von Batterien nebeneinander angeordnet sind.

Aus der US2004150926 A1 ist ein gattungsbildendes Kraftfahrzeug mit einem Hybridantrieb bekannt.

Die Aufgabe der Erfindung ist es, ein Kraftfahrzeug mit einem Hybridantrieb zu schaffen, bei dem die Anordnung von Einzelkondensatorzellen einer Kondensatorbatterie Platz sparend erfolgt.

Diese Aufgabe wird durch die Merkmale des Anspruchs 1 gelöst.

Die erfindungsgemäße Kondensatorbatterie für einen elektrischen Speicher ist so aufgebaut, dass die Anzahl der vorhandenen Einzelkondensatorzellen einer Kondensatorbatterie in Reihe geschaltet sind und in geradzahliger Strangzahl mehrsträngig in einem Kraftfahrzeug angeordnet sind. Dies hat den Vorteil, dass die Rückleitung über die Einzelkondensatorzellen der Kondensatorbatterie direkt erfolgt. Dadurch wird ein relativ schweres Stromkabel parallel zu den vorgesehenen Strängen der Einzelkondensatorzellen eingespart.

In einer vorteilhaften Ausführungsform sind die mehrsträngig und geradzahlig vorgesehenen Einzelkondensatorzellen der Kondensatorbatterie in einem Hohlraum der Karosserie angeordnet. Vorteilhafterweise sind die Strangmodule der Einzelkondensatorzellen in einem Schwellerhohlraum eingebaut.

In einer vorteilhaften Ausführungsform ist der Karosseriehohlraum an einer Außenseite der Karosserie ausgebildet und mit einer Außenhaut verkleidet. Dadurch ergibt sich eine gute Zugänglichkeit zu den Einzelköndensatorzellen.

Die Kühlung der Strangmodule der Einzelkondensatorzellen der Kondensatorbatterie erfolgt über eine Luftkühlung und/oder eine Flüssigkeitskühlung. Vorteilhafterweise ist zur Oberflächenvergrößerung ein Hohlraum zwischen der Karosserie und gegebenenfalls der Außenhautverkleidung, die die Außenoberflächen der Einzelkondensatorzellen umgeben, und den Außenoberflächen der Einzelkondensatorzellen der Kondensatorbatterie mit einem thermisch leitenden Material ausgefüllt.

Die jeweilige Einzelkondensatorzelle weist einen Querschnitt auf, der vorteilhafterweise zylindrisch oder polygonal, wie beispielsweise rechteckig oder quadratisch, ausgebildet ist, so dass eine platzsparende Anordnung möglich ist.

In einer vorteilhaften Ausführungsform sind einzelne und/oder mehrere oder alle Einzelkondensatorzelle innerhalb eines Strangmoduls durch biegeweiche und/oder torsionsweiche, längenausgleichende Elemente, wie beispielsweise Laschen oder dergleichen, miteinander verbunden. Dadurch werden von außen eingeleitete Biege- und/oder Torsionsbelastungen sowie beispielsweise durch Temperaturänderungen verursachte Längenausdehnungen ausgeglichen, ohne dass die Gehäuse der Einzelzellen beschädigt werden.

Eine Ausführungsform der Erfindung wird nachstehend anhand der Zeichnungen beispielshalber beschrieben. Dabei zeigen:
- Figur 1: eine schematische Seitenansicht eines Kraftfahrzeuges, bei dem in einem Schwellerbereich eine aus Einzelkondensatorzellen bestehende Kondensatorbatterie eingebaut ist und
- Figur 2: eine Schnittansicht eines Schwellerbereiches, in dem die Einzelkondensatorzellen der Kondensatorbatterie angeordnet sind.

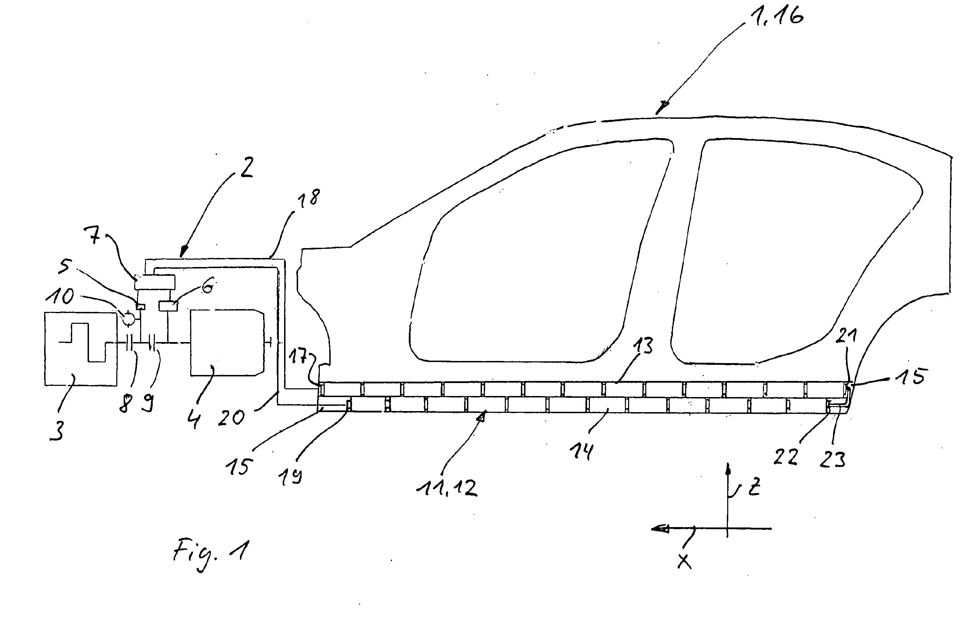

Die Figur 1 zeigt eine schematische Darstellung eines Kraftfahrzeuges 1 mit einem Hybridantrieb 2. Ein solcher Hybridantrieb ist beispielsweise aus der DE 199 17 665 bekannt. Der Hybridantrieb 2 weist im Wesentlichen einen Verbrennungsmotor 3, ein Getriebe 4, elektrische Maschinen 5, 6, eine Leistungselektronik 7, schaltbare Kupplungen 8, 9, eine Hydraulikpumpe des Fahrzeuggetriebes 10 und einen elektrischen Speicher 11 auf.

In der vorliegenden Ausführungsform ist der elektrische Speicher 11 als eine Kondensatorbatterie ausgebildet, die aus in Reihe geschalteten Einzelkondensatorzellen 12 besteht. Die Einzelkondensatorzellen sind in zwei Strängen oder Strangmodulen 13, 14 in einem Hohlraum 15 einer Karosserie 16 in Fahrzeuglängsrichtung x angeordnet.

Ein vorderes Ende 17 des oberen Stranges 13 ist über eine Leitung 18 mit der Leistungselektronik 7 verbunden. Ein vorderes Ende 19 des in Bezug auf die vertikale Fahrzeugachse z gesehenen, unteren Stranges 14 ist über eine Leitung 20 mit der Leistungselektronik 7 verbunden. Die hinteren Enden 21, 22 der beiden Stränge 13, 14 sind über eine Leitung 23 miteinander verbunden.

In einer Ausführungsform sind einzelne und/oder mehrere Einzelkondensatorzellen 12 oder alle Einzelkondensatorzellen 12 innerhalb eines Strangmoduls 13, 14 durch biegeweiche und/oder torsionsweiche, längenausgleichende Elemente, wie Laschen oder dergleichen, miteinander verbunden. Dadurch werden von außen eingeleitete Biege- und/oder Torsionsbelastungen sowie beispielsweise durch Temperaturänderungen verursachte Längenausdehnungen ausgeglichen, ohne dass die Gehäuse der Einzelkondensatorzellen 12 beschädigt werden.

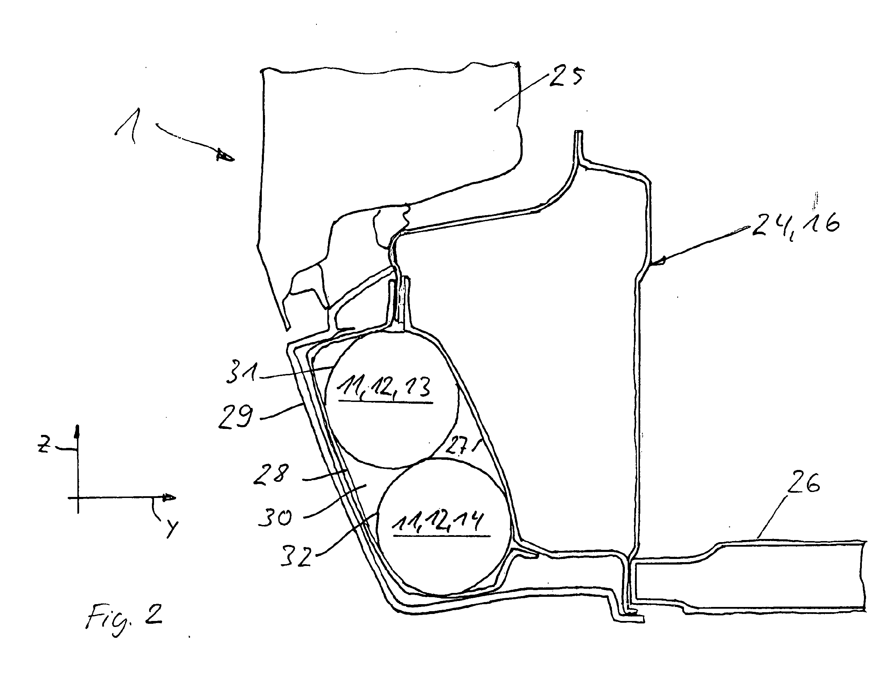

Die Figur 2 zeigt eine Schnittansicht in Höhe eines Schwellers 24, die unterhalb einer Tür 25 und im Anschluss an einen Boden 26 der Karosserie 16 verläuft. An einem unteren, äußeren Abschnitt 27 des Schwellers 24 sind der obere und der untere Strang 13, 14 über ein Montageteil 28 am Schweller 24 befestigt. Der Schweller 24 sowie die beiden Stränge 13, 14 der Einzelkondensatorzellen 12 sind an einer fahrzeugabgewandten Seite durch eine Außenhaut 29 abgedeckt. Die Außenhaut 29 ist beispielsweise aus einem Kunststoff hergestellt.

Aus der Darstellung der Figur 2 ergibt sich, dass die Querschnittsform der gezeigten Ausführungsform einer Einzelkondensatorzelle 12 kreisförmig ist. Ein Zwischenraum 30 zwischen den Außenflächen 31, 32 der Einzelkondensatorzellen 12 und den dazu gegenüberliegenden Flächen des Schwellers 24 und der Außenhaut 29 ist in einer Ausführungsform zur Kühlung mit einem wärmeleitfähigen Material oder mit Kühlvorrichtungen ausgefüllt, so dass die Einzelkondensatorzellen 12 gekühlt werden. In der Regel sind die Einzelkondensatorzellen 12 symmetrisch auf beiden Fahrzeugseiten angeordnet.

## Patentansprüche

1. Kraftfahrzeug mit einem Hybridantrieb, der einen elektrischen Speicher für einen elektrischen Antrieb aufweist, wobei der elektrische Speicher aus Einzelkondensatorzellen aufgebaut ist, mit einer Karosserie, an der der elektrische Speicher angeordnet ist,
wobei die Anzahl der vorhandenen Einzelkondensatorzellen (12) des elektrischen Speichers (11) in Reihe geschaltet sind,
wobei die Einzelkondensatorzellen (12) in Strängen oder Strangmodulen (13, 14) parallel zueinander angeordnet sind,
wobei mindestens zwei Stränge oder Strangmodule (13, 14) vorliegen, wobei zwei benachbarte Stränge (13, 14) zur Fortsetzung der Stromleitung an den passenden, gegenüberliegenden Enden (21, 22) über eine Leitung (23) miteinander verbunden sind,
wobei die Anzahl der Stränge oder Strangmodule (13, 14) geradzahlig ist, so dass die beiden nicht miteinander verbundenen Enden (17, 19) des Anfangsstranges (13) und des Endstranges (14) der geradzahlig vorgesehenen Stränge (13, 14) benachbart auf der gleichen Seite am Anbringungsort (15, 24) an der Karosserie (16) angeordnet sind.
**dadurch gekennzeichnet, dass** die in Strängen (13, 14) angeordneten Einzelkondensatorzellen (12) des elektrischen Speichers (11) in einem Hohlraum (15) der Karosserie (16) des Kraftfahrzeuges (1) in Fahrzeuglängsrichtung (x) vorgesehen sind,
dass der Hohlraum (15) der Karosserie (16) ein offenes Profil (27) aufweist, das durch eine Außenhaut (29) verschließbar ist,
dass in einem Zwischenraum (30) zwischen den Außenflächen (31, 32) der Einzelkondensatorzellen (12) und der die Außenflächen (31, 32) umgebenden Karosserieteile (27, 29) Mittel vorgesehen sind, die zur Kühlung der Einzelkondensatorzellen (12) dienen,
dass der jeweilige Hohlraum (15) in der Karosserie (16) zur Anordnung der Einzelkondensatorzellen (12) des elektrischen Speichers (11) in einem Schweller (24) ausgebildet ist, wobei der Schweller (24) unterhalb mindestens einer Tür (25) und im Anschluss an einen Boden (26) der Karosserie (16) verläuft,
dass der Schweller (24) sowie die Stränge (13, 14) der angeordneten Einzelkondensatorzellen (12) des elektrischen Speichers (11) an einer fahrzeugabgewandten Seite durch eine Außenhaut (29) abgedeckt sind,
dass die Außenhaut (29) aus einem Kunststoff hergestellt ist und
dass die Stränge (13, 14) der angeordneten Einzelkondensatorzellen (12) des elektrischen Speichers (11) symmetrisch auf beiden Fahrzeugseiten angeordnet sind.

2. Kraftfahrzeug nach einem der vorhergehenden Ansprüche, **dadurch gekennzeichnet, dass** die Kühlung der Einzelkondensatorzellen (12) über eine Luftkühlung und/oder über eine Flüssigkeitskühlung erfolgt.

3. Kraftfahrzeug nach einem der vorhergehenden Ansprüche, **dadurch gekennzeichnet, dass** der Zwischenraum (30) mit einem thermisch leitenden Material ausgefüllt ist, das die Wärme der Einzelkondensatorzellen (12) an die Karosserie (16, 24, 27, 29) weiterleitet.

4. Kraftfahrzeug nach einem der vorhergehenden Ansprüche, **dadurch gekennzeichnet, dass** die jeweilige Einzelkondensatorzelle (12) einen Querschnitt aufweist, der zylinderförmig oder polygonal, wie rechteckig oder quadratisch, ist.

5. Kraftfahrzeug nach einem der vorhergehenden Ansprüche, **dadurch gekennzeichnet, dass** die beiden nicht miteinander verbundenen Enden (17, 19) des Anfangsstranges (13) und des Endstranges (14) auf der Seite des Hybridantriebes (2) angeordnet sind.

6. Kraftfahrzeug nach einem der vorhergehenden Ansprüche, **dadurch gekennzeichnet, dass** einzelne und/oder mehrere Einzelkondensatorzellen (12) oder alle Einzelkondensatorzellen (12) innerhalb eines Strangmoduls (13, 14) durch biegeweiche und/oder torsionsweiche, längenausgleichende Elemente, wie Laschen oder dergleichen, miteinander verbunden sind.

## Claims

1. A motor vehicle with a hybrid drive comprising an electric memory for an electric drive, wherein the electric memory is made up of individual capacitor cells, the vehicle also having a body on which the electric memory is disposed,
wherein the individual capacitor cells (12) of the selected memory (11) are connected in series,
wherein the individual capacitor cells (12) are disposed in lanes or lane modules (13, 14) parallel to one another,
wherein there are at least two lanes or lane modules (13, 14), wherein two adjoining lanes (13, 14) are connected together by a line (23) in order to continue the flow of current to the corresponding facing ends (21, 22),
wherein the number of lanes or lane modules (13, 14) is even, so that the two not-connected ends (17, 19) of the initial lane (13) and end lane (14) of the even number of lanes (13, 14) are disposed beside one another and on the same side at the place of attachment (15, 24) to the body (16), **characterised in that** the lanes (13, 14) of individual capacitor cells (12) of the electric memory (11) are disposed in a cavity (15) in the body (16) of the vehicle (1) and in the longitudinal direction (x) of the vehicle,
the cavity (15) in the body (16) has an open profile (27) closable by a skin (29),
means for cooling the individual capacitor cells (12) are provided in a space (30) between the outer surfaces (31, 32) of the individual capacitor cells (12) and the parts (27, 29) of the body surrounding the said surfaces (31,32),
the cavity (15) in the body (16) is adapted to hold the individual capacitor cells (12) of the electric memory (11) in a sillboard (24), wherein the sillboard (24) extends under at least one door (25) and is connected to a floor (26) of the body (16),
the sillboard (24) and the lanes (13, 14) of capacitor cells (12) of the electric memory (11) are covered by a skin (29) on the side remote from the vehicle,
the skin (29) is made of a plastics material and
the lanes (13, 14) of individual capacitor cells (12) of the electric memory (11) are disposed symmetrically on both sides of the vehicle.

2. A vehicle according to any of the preceding claims, **characterised in that** the individual capacitor cells (12) are cooled by air and/or liquid.

3. A vehicle according to any of the preceding claims, **characterised in that** the space (30) is filled with a heat-conducting material which transmits the heat of the individual capacitor cells (12) to the body (16, 24, 27, 29).

4. A vehicle according to any of the preceding claims, **characterised in that** each individual capacitor cell (12) has a cross-section which is cylindrical or polygonal, e.g. rectangular or square.

5. A vehicle according to any of the preceding claims, **characterised in that** the two not-connected ends (17, 19) of the individual lane (13) and the end lane (14) are disposed on the same side as the hybrid drive (2).

6. A vehicle according to any of the preceding claims, **characterised in that** one and/or more individual capacitor cells (12) or all individual capacitor cells (12) in a main module (13, 14) are connected to one another by bendable and/or twistable length-compensating elements such as lugs or the like.

## Revendications

1. Véhicule automobile à entraînement hybride comportant un accumulateur électrique pour l'entraînement électrique, l'accumulateur électrique étant composé de cellules simples de condensateur, la carrosserie recevant l'accumulateur électrique,
les cellules simples de condensateur (12) de l'accumulateur électrique (11) sont branchées en série,
les cellules simples de condensateur (12) sont installées en cordons ou en modules de cordons (13, 14), parallèles,
au moins deux cordons ou modules de cordons (13, 14) étant prévus,
deux cordons voisins (13, 14) étant reliés l'un à l'autre aux extrémités adaptées (21, 22), opposées par un conducteur (23) pour poursuivre le chemin de courant,
le nombre des cordons ou modules de cordons (13, 14) étant paire de façon que les deux extrémités (17, 19) non reliées du cordon initial (13) et du cordon final (14) des cordons en nombre paire (13, 14) se situent au voisinage, du même côté, à l'emplacement de l'installation (15, 24) dans la carrosserie (16),
**caractérisé en ce que**
les cellules simples de condensateur (12) installées dans les cordons (13, 14), composant l'accumulateur électrique (11) sont logées dans une cavité (15) de la carrosserie (16) du véhicule (1), dans la direction longitudinale X du véhicule,
la cavité (15) de la carrosserie (16) a un profil ouvert (27), fermé par une pellicule extérieure (29),
l'intervalle (30) entre les surfaces extérieures (31, 32) des cellules simples de condensateur (12) et les parties de carrosserie (27, 29) qui entourent les surfaces extérieures (31, 32), est occupé par des moyens servant à refroidir les cellules simples de condensateur (12),
la cavité (15) respective est réalisée dans la carrosserie (16) pour recevoir les cellules simples de condensateur (12) de l'accumulateur électrique (11) dans la traverse de portière (24),
cette traverse de portière (24) passant sous au moins une portière (25) en étant raccordée au plancher (26) de la carrosserie (16),
la traverse (24) ainsi que les cordons (13, 14) des cellules simples de condensateur (12) de l'accumulateur électrique (11) sont couverts par une pellicule extérieure (29) sur le côté non tourné vers le véhicule,
la pellicule extérieure (29) est en matière plastique et
les cordons (13, 14) des cellules simples de condensateur (12) de l'accumulateur électrique (11) sont installées symétriquement sur les deux côtés du véhicule.

2. Véhicule automobile selon la revendication 1,
**caractérisé en ce que**
le refroidissement des cellules simples de condensateur (12) se fait par un refroidissement par air et/ou un refroidissement par liquide.

3. Véhicule automobile selon l'une des revendications précédentes,
**caractérisé en ce que**
l'intervalle (30) est rempli d'une matière thermoconductrice qui transmet la chaleur des cellules simples de condensateur (12) à la carrosserie (16, 24, 27, 29).

4. Véhicule automobile selon l'une des revendications précédentes,
**caractérisé en ce que**
chaque cellule simple de condensateur (12) a une section cylindrique ou polygonale ou encore rectangulaire ou carrée.

5. Véhicule automobile selon l'une des revendications précédentes, **caractérisé en ce que**
les deux extrémités (17, 19) non reliées du cordon initial (13) et du cordon final (14) sont prévues du côté de l'entraînement hybride (2).

6. Véhicule automobile selon l'une des revendications précédentes,
**caractérisé en ce que**
les différentes cellules simples de condensateur et/ou plusieurs cellules simples de condensateur (12) ou toutes les cellules simples de condensateur (12) sont reliées dans un module de cordons (13, 14) par une barre de flexion et/ou une barre de torsion, des éléments de compensation de longueur tels que les pattes ou analogues.
